# EUROPÄISCHE PATENTSCHRIFT

(11) **EP 2 156 723 B1**
(45) Veröffentlichungstag und Bekanntmachung des Hinweises auf die Patenterteilung: **21.02.2018**
(21) Anmeldenummer: 09010494.4
(22) Anmeldetag: 14.08.2009
(51) Int. Cl.: A01B 71/08, A01D 75/20, F16P 3/00

(54) **Elektrisches und/oder elektronisches Sicherheitssystem**
Electric and/or electronic safety system
Système de sécurité électrique et/ou électronique

(30) Priorität: 21.08.2008 DE 102008039115
(43) Veröffentlichungstag der Anmeldung: 24.02.2010
(73) Patentinhaber: Amazonen-Werke H. Dreyer GmbH & Co. KG, 49205 Hasbergen (DE)
(72) Erfinder: Resch, Rainer, Dr., 49170 Hagen a TW (DE)

(56) Entgegenhaltungen:
- EP-B1- 1 580 043
- DE-B4- 4 412 111
- GB-A- 2 206 662
- US-A1- 2006 011 393

## Beschreibung

Die Erfindung betrifft ein elektrisches und/oder elektronisches Sicherheitssystem für eine aus einem Ackerschlepper und zumindest eine an den Ackerschlepper angekuppelte Anbau- und/oder Anhängemaschine bestehenden Maschinenkombination gemäß dem Oberbegriff des Anspruchs 1.

Derartige Maschinenkombination weisen Antriebselemente auf. Teilweise sind derartigen Antriebselementen die deren Sicherheit überwachenden und Signaldaten übermittelnden Sensorelemente zugeordnet. Teilweise können aufgrund der Signale der Sensorelemente betätigbare Stellelemente für die Antriebselemente des Schleppers oder der Maschine vorgesehen sein.

Ein Sicherheitssystem gemäß dem Oberbegriff des Anspruches 1 ist durch die EP 15 80 043 B1 bekannt. Bei diesem System geht es im Wesentlichen darum, dass das aus Schlepper und Anhänge-/ Anbaugerät bestehende Gespann nur dann betrieben werden kann, wenn es richtig angekuppelt ist und der Schlepper beim Abkuppelvorgang nur dann vom Gerät wegfahren kann, wenn alle Verbindungen und Leitungen zwischen Schlepper und Gerät voneinander entfernt bzw. gelöst sind. Hierdurch soll erreicht werden, dass ein fehlerhaftes abkoppeln des Anhängegerätes vermieden wird.

Durch die DE 2 948 664 C2 ist eine Maschinenkombination bekannt, die aus einem Ackerschlepper und an diesen Ackerschlepper anhängbare Anbau- oder Anhängemaschine besteht. Den Anhängemaschinen ist ein Schutzbügel zugeordnet, der mit als Schalter ausgebildetem Sensorelement versehen ist, welches die Antriebselemente des Schleppers oder die Kupplung der Anhängemaschine abschaltet, wenn der Sicherheitsbügel sich nicht in der vorgesehenen Position befindet.

Die EP 1 580 043 B1 weist Sensoren an der Anhängeeinrichtung des Zugfahrzeuges auf, um den Koppelzustand zum Anhängegerät zu überwachen. Es wird vorgeschlagen, eine Wegfahrverhinderung bei Vorliegen eines unvollständig oder nicht angekoppelten Anhängegerätes vorzusehen.

In vielen Fällen ist dieses bekannte elektrische Sicherheitssystem für aus landwirtschaftlichen Ackerschleppern und angekuppelten Maschinen gebildeten Maschinenkombinationen nicht ausreichend und außerdem aufwendig und unsicher, da es verschiedene Schnittstellen zwischen Schlepper und angebauter Maschine aufweist.

Der Erfindung liegt die Aufgabe zugrunde, ein einfach aufgebautes elektrisches und/oder elektronisches Sicherheitssystem zu schaffen, welches einfach aufgebaut und betriebssicher ist.

Diese Aufgabe wird erfindungsgemäß durch die Merkmale des Anspruches 1 gelöst. In Folge dieser Maßnahmen sind auf beiden Seiten der Maschinenkombination Schnittstellen vorhanden, die es erlauben mittels eines elektrischen Signals im Bedarfsfall die entweder pneumatische und/oder mechanische und/oder hydraulische und/oder elektrische Energieversorgung mittels dafür vorgesehener Stellelemente zu unterbrechen, bzw. einen Schaltvorgang herzustellen, wenn die an den Schlepper angekoppelte Maschine ein entsprechendes Signal bereitstellt. Es ist also vorgesehen, dass das System so aufgebaut ist, dass die Antriebselemente der angekoppelten Maschine über die zugeordneten Stellelemente nur dann schaltbar sind, wenn über einen Sicherheitskreis mitgeteilt wird, dass sich zumindest alle Systeme der angekoppelten Maschine im Sicherheits- und Schutzzustand befinden. Auch kann dieses System ein sogenanntes Not-Aus-System beinhalten.

Um über die Schnittstelle verschiedene Arbeitsaggregate, denen Stellelemente zugeordnet sind, von auf dem Ackerschlepper vorhandenen Steuergeräten oder Bordcomputer sicher ansteuern zu können, ist vorgesehen, dass die Schnittstelle zumindest zwei für zumindest zwei verschiedene Stellelemente vorgesehene Signalkanäle aufweist.

Eine einfache Ausgestaltung und ein einfaches zusammenfügen der Signalkanäle lässt sich dadurch verwirklichen, dass die Signalkanäle im Bereich der Schnittstelle von einer zusammensteckbaren Leitung gebildet werden.

Um über die Schnittstelle im Rahmen des elektrischen/elektronischen Sicherheitssystem verschiedenartig ausgebildete und verschiedenartig betätigbare Stellelemente versorgen zu können, ist vorgesehen, dass die Schnittstelle zumindest jeweils zumindest einen Signalkanal für ein pneumatisches, und/oder mechanisches und/oder hydraulisches und/oder elektrisches und/oder elektronisches System vorgesehen ist.

Weitere Einzelheiten der Erfindung sind der Beispielsbeschreibung und den Zeichnungen zu entnehmen.

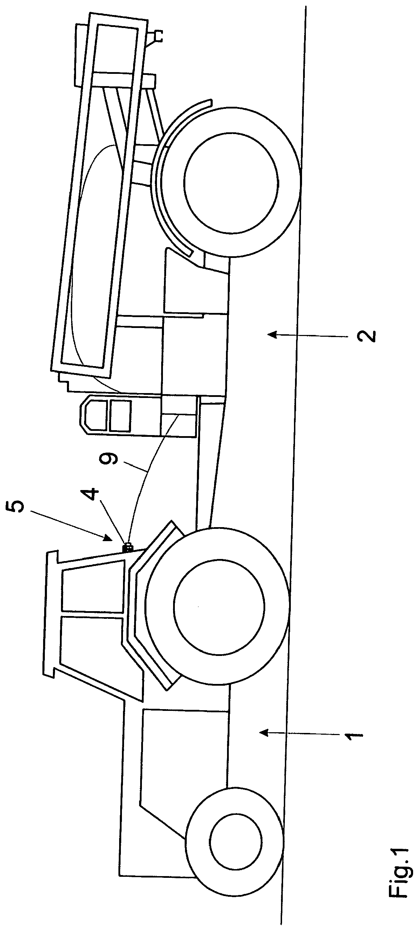

Hierbei zeigen
- Fig. 1: die Maschinenkombination in Seitenansicht und in Prinzipdarstellung,
- Fig. 2: die als Steckverbindung ausgebildete Schnittstelle im vergrößerten Maßstab und in Prinzipdarstellung,
- Fig. 3: die Signalkanäle der Schnittstelle in der Ansicht III/III in Prinzipdarstellung und
- Fig.4: einen Schaltplan des Sicherheitssystem der Maschinenkombination in Prinzipdarstellung.

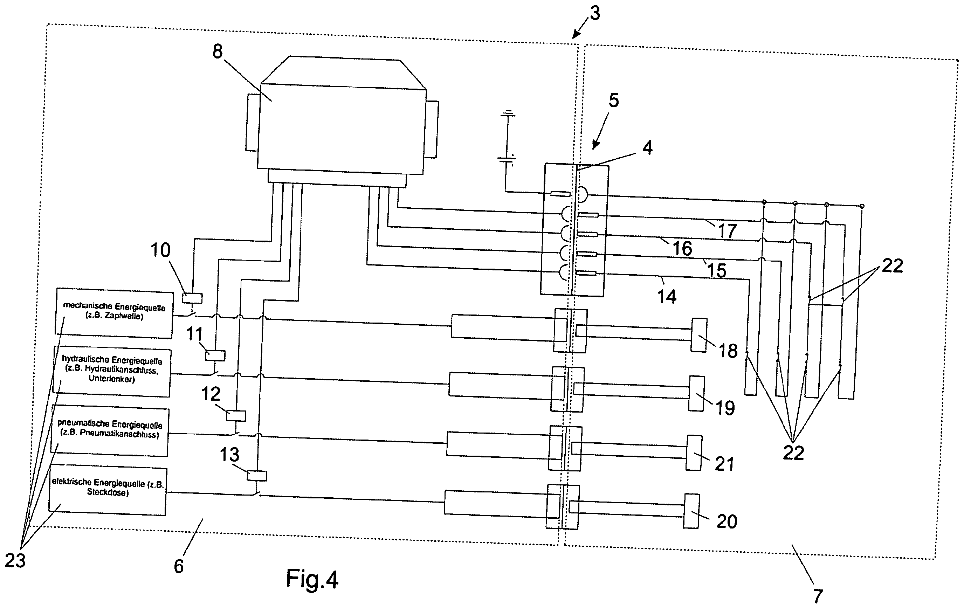

Die Maschinenkombination des Ausführungsbeispiels besteht aus dem Ackerschlepper 1 und der an dem Ackerschlepper 1 angehängten gezogenen Feldspritze 2. Dieser Maschinenkombination ist ein elektronisches und elektrisches Sicherheitssystem 3 zugeordnet, wie es schematisch in Fig. 4 dargestellt ist. Dieses Sicherheitssystem 3 besteht aus über eine als Steck- und Steckdosenverbindung 4 ausgebildeten Schnittstelle 5 die miteinander gekoppelten und kommunizierenden Sicherheitskreise des Ackerschleppers und der Maschine 2, wie dies die Fig. 4 zeigt. Über diese Schnittstelle 5 werden die Signaldaten über die sicherheitsrelevanten Zustände der Maschine 2 an die elektronische Zentrale 8, die beispielsweise als Bordcomputer ausgebildet ist, übermittelt.

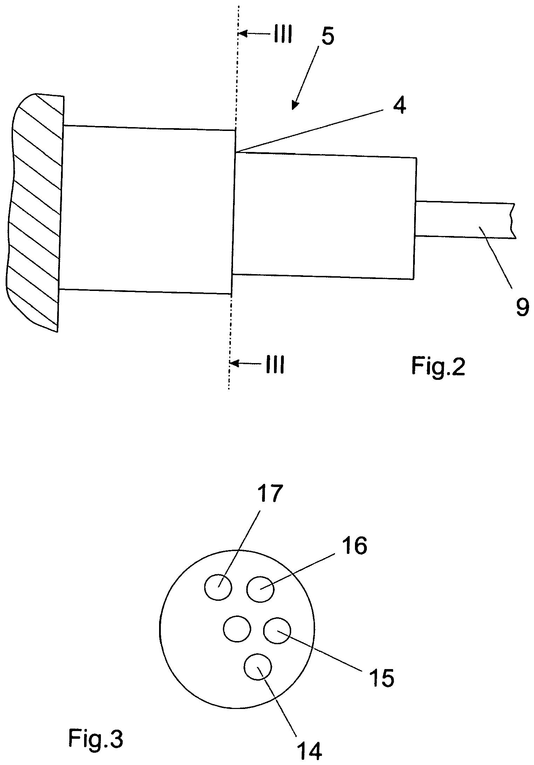

Die Schnittstelle 5 wird von den in den Fig. 2 und 3 schematisch dargestellten Stecker- und Steckdosenverbindung 4 gebildet. Über diese Stecker-Steckdosenverbindung 4 wird im Bereich der Schnittstelle 5 die zusammensteckbare Leitung 9 gebildet.

Diese Schnittstelle 5 weist zumindest für zwei verschiedene Stellelemente (10,11,12,13) vorgesehene Signalkanäle (14,15,16,17), im Ausführungsbeispiel für vier Signalkanäle auf, wie die Fig. 3 und 4 zeigen. Hierbei ist eine Signalleitung (14) für zumindest ein eine mechanische Vorrichtung 18 bestätigendes Stellelement 10, eine Signalleitung 15 bzw. Signalkanal für zumindest ein eine hydraulische Vorrichtung 9 bestätigendes Stellelement 11, ein Signalkanal 16 für zumindest ein eine elektrische Vorrichtung 20 betätigendes Stellelement 13 und ein Signalkanal für zumindest ein eine pneumatische Vorrichtung 21 betätigendes Stellelement 12 vorgesehen.

Die Maschinenkombination weist mehrere Antriebselemente 18,19,20,21, die mechanisch, hydraulisch, pneumatisch oder elektrisch ausgebildet sein können, auf. Des Weiteren weist die Maschinenkombination bzw. das Sicherheitssystem die Sicherheit überwachenden Signaldaten übermittelten und ihnen zugeordneten Sensorelemente auf. Aufgrund der Signale der Sensorelemente sind die Stellelemente 10,11,12,13 der Antriebselemente 18,19,20,21 des Schleppers 1 und/oder der Maschine 2 betätigbar.

Die einzelnen Antriebselemente der Anbau- und Anhängemaschine 2 die an den Ackerschlepper 1 angekoppelt ist, kann von dem Schlepper 1 über die Stellelemente 10,11,12,13 und den Bordcomputer 8 nur betätigt werden, wenn sich alle Sicherheitssysteme der Anhängemaschine 2 in Schutzstellung befinden und die Sensorelemente, die den Schutzelementen zugeordnet sind, entsprechende Signale an die Sicherheitssensoren und Schalter 22 übermitteln und dass denn über die Signalleitungen 14,15,16,17 und die Schnittstelle 5 entsprechende Signale an die Zentrale 8 des Sicherheitssystems und bzw. Bordcomputer 8 übermittelt werden. Erst wenn alle Signale von den sicherheitsrelevanten Sicherheitssensoren und Schaltern 22 dem zentralen System bzw. Bordcomputer 8 mitteilen, dass sich alle Schutzelemente in Schutzposition befinden, können die Stellelemente 10,11,12,13 für die einzelnen Energiequellen 23 und Antriebselemente 18,19,20,21 geschaltet werden, damit die Anhängemaschine 2 in Betriebszustand gesetzt und entsprechend betrieben werden kann.

Hierbei ist das System so aufgebaut, dass die pneumatische, mechanische, hydraulische oder elektrische Energieversorgung 23 mittels dafür vorgesehener Stellelemente 10,11,12,13 über die Zentrale 8 oder den Bordcomputer 8 durch Ansteuerung entsprechender Sicherheitssensoren und Schalter 22 der Schaltzustand für den Betriebszustand nur dann hergestellt wird, wenn über die entsprechenden Sicherheitskreise 6,7 dem Bordcomputer 8 mitgeteilt wird, dass sich alle Systeme im Sicherheits- und Schutzzustand befinden. Erst dann wird ein entsprechendes Signal oder Signale bereitgestellt, dass sich die Antriebselemente 18,19,20,21 über die zugeordneten Stellelemente 10,11,12,13 einschalten lassen, bzw. eingeschaltet werden können. Hierbei ist ein Not-Aus-System vorgesehen, wenn sich auch nur ein sicherheitsrelevantes Schutzelement nicht in Schutzposition befindet, dass dann der Betriebszustand abgeschaltet wird oder nicht hergestellt werden kann. In diesem Falle wird sofort über die entsprechenden Sicherheitskontakte oder Sicherheitssensoren und Schalter ein entsprechendes Signal an die zentrale Schaltstelle 8 bzw. den Bordcomputer 8 übermittelt, so dass sofort die Antriebssysteme abgeschaltet und stillgesetzt werden, damit es zu keiner sicherheitsgefährdenden Situation kommen kann.

## Patentansprüche

1. Elektrisches und/oder elektronisches Sicherheitssystem für eine aus einem Ackerschlepper (1) und zumindest eine an den Ackerschlepper angekuppelte Anbau- und/oder Anhängemaschine (2)bestehende Maschinenkombination, wobei das Sicherheitssystem (6,7) über eine als Stecker-/Steckdosenverbindung (4) ausgebildete Schnittstelle (5) miteinander gekoppelten und kommunizierenden Sicherheitskreise (6,7) des Schleppers (1) und der Maschine (2) besteht und über die Schnittstelle (5) Signaldaten übermittelbar sind,
mit
- Antriebselementen (18,19,20,21),
- die Sicherheit überwachenden und Signaldaten übermittelnden zugeordneten Sicherheitssensoren und Schalter (22),
- mit aufgrund der Signale der Sicherheitssensoren und Schalter (22) der angekoppelten Maschine (2) betätigbaren Stellelementen (10,11,12,13) der Antriebselemente (18,19,20,21) des Schleppers (1) und/oder der Maschinen (2),
**dadurch gekennzeichnet,**
**dass** die Antriebselemente (18,19,20,21) und die Sicherheitssensoren und Schalter (22) sich zumindest an der angekoppelten Maschine (2)befinden, dass das Sicherheitssystem so aufgebaut ist, dass die Antriebselemente (18,19,20,21) der angekoppelten Maschine (2) über die zugeordneten Stellelemente (10,11,12,13) nur dann schaltbar sind und/oder eingeschaltet werden können, wenn über den Sicherheitskreis mitgeteilt wird, dass sich zumindest alle Systeme der angekoppelten Maschine (2) im Sicherheits- und Schutzzustand befinden.

2. Sicherheitssystem nach Anspruch 1, **dadurch gekennzeichnet, dass** die Schnittstelle (5) zumindest zwei für zumindest zwei verschiedene Stellelemente (10,11,12,13) vorgesehene Signalkanäle (14,15,16,17) aufweist.

3. Sicherheitssystem nach Anspruch 2, **dadurch gekennzeichnet, dass** die Signalkanäle (15,16,17,18) im Bereich der Schnittstelle (4) von einer zusammensteckbaren Leitung (5,9) gebildet werden.

4. Sicherheitssystem nach Anspruch 2, **dadurch gekennzeichnet, dass** die Schnittstelle (4) jeweils zumindest einen Signalkanal (15,16,17,18) für ein pneumatisches, und/oder mechanisches und/oder hydraulisches und/oder elektrisches und/oder elektronisches System vorgesehen ist.

## Claims

1. Electrical and/or electronic safety system for a machine combination which consists of an agricultural tractor (1) and at least one mounted and/or trailer machine (2) which is coupled to the tractor, wherein the safety system (6, 7) comprises safety circuits (6, 7) of the tractor (1) and of the machine (2) which are coupled to and communicate with one another via an interface (5) which is in the form of a plug/socket connection (4) and signal data can be transmitted via the interface (5),
comprising
- drive elements (18, 19, 20, 21),
- associated safety sensors and switches (22) which monitor the safety and transmit signal data,
- having actuating elements (10, 11, 12, 13) of the drive elements (18, 19, 20, 21) of the tractor (1) and/or of the machine (2), which actuating elements can be operated on the basis of the signals from the safety sensors and switches (22) of the coupled machine (2),
**characterized in that** the drive elements (18, 19, 20, 21) and the safety sensors and switches (22) are located at least on the coupled machine (2), **in that** the safety system is constructed such that the drive elements (18, 19, 20, 21) of the coupled machine (2) are switchable and/or can be switched on by means of the associated actuating elements (10, 11, 12, 13) only when they are informed by means of the safety circuit that at least all of the systems of the coupled machine (2) are in the safety and protection state.

2. Safety system according to Claim 1, **characterized in that** the interface (5) has at least two signal channels (14, 15, 16, 17) which are provided for at least two different actuating elements (10, 11, 12, 13).

3. Safety system according to Claim 2, **characterized in that** the signal channels (15, 16, 17, 18) are formed in the region of the interface (4) by a mateable line (5, 9).

4. Safety system according to Claim 2, **characterized in that** the interface (4) is provided with in each case at least one signal channel (15, 16, 17, 18) for a pneumatic and/or mechanical and/or hydraulic and/or electrical and/or electronic system.

## Revendications

1. Système de sécurité électrique et/ou électronique destiné à une combinaison de machines constituée d'un tracteur agricole (1) et d'au moins une machine portée et/ou attelée (2) accouplée au tracteur agricole, dans lequel le système de sécurité (6, 7) est constitué d'un circuit de sécurité (6, 7) du tracteur (1) et de la machine (2), qui sont accouplés l'un à l'autre et communiquent l'un avec l'autre par l'intermédiaire d'une interface (5) réalisée sous la forme d'une connexion par fiche/douille (4), des données de signaux pouvant être transmises par l'intermédiaire de l'interface (5),
comportant
- des éléments d'entraînement (18, 19, 20, 21),
- des capteurs de sécurité et des commutateurs (22) associés surveillant la sécurité et transmettant des données de signaux,
- des éléments de réglage (10, 11, 12, 13), des éléments d'entraînement (18, 19, 20, 21) du tracteur (1) et/ou des machines (2) pouvant être actionnés en fonction des signaux des capteurs de sécurité et des commutateurs (22) de la machine accouplée (2),
**caractérisé en ce que** les éléments d'entraînement (18, 19, 20, 21) et les capteurs de sécurité et les commutateurs (22) se trouvent au moins sur la machine (2) accouplée, **en ce que** le système de sécurité est conçu de manière à ce que les éléments d'entraînement (18, 19, 20, 21) de la machine accouplée (2) ne puissent être commutés et/ou activés par l'intermédiaire des éléments de réglage (10, 11, 12, 13) associés que lorsque le circuit de sécurité signale qu'au moins la totalité des systèmes de la machine accouplée (2) se trouvent dans un état de sécurité et de protection.

2. Système de sécurité selon la revendication 1, **caractérisé en ce que** l'interface (5) comporte au moins deux canaux de signaux (14, 15, 16, 17) prévus pour au moins deux éléments de réglage (10, 11, 12, 13) différents.

3. Système de sécurité selon la revendication 2, **caractérisé en ce que** les canaux de signaux (15, 16, 17, 18) sont formés dans la région de l'interface (4) par une ligne (5, 9) enfichable.

4. Système de sécurité selon la revendication 2, **caractérisé en ce que** l'interface (4) comporte respectivement au moins un canal de signal (15, 16, 17, 18) prévu pour un système pneumatique et/ou mécanique et/ou hydraulique et/ou électrique et/ou électronique.
